# EUROPÄISCHE PATENTANMELDUNG

(11) **EP 4 032 731 A1**
(43) Veröffentlichungstag der Anmeldung: **27.07.2022**
(21) Anmeldenummer: 22150796.5
(22) Anmeldetag: 10.01.2022
(51) Int. Cl.: B60D 1/06, B60D 1/58, B60D 1/62, B60R 1/00

(54) **ERMITTELN EINES ORDNUNGSGEMÄSS ANGESCHLOSSENEN ANHÄNGERS**

(30) Priorität: 25.01.2021 DE 102021200632
(71) Anmelder: VOLKSWAGEN AG, 38440 Wolfsburg (DE)
(72) Erfinder: Moser, Jürgen-Henning, 38110 Braunschweig (DE)

(57) **Zusammenfassung**

Um ein Verfahren zum Detektieren eines an ein Zugfahrzeug ordnungsgemäß angeschlossenen Anhängers bereitzustellen, welches anhand der fahrzeugseitigen Mittel des Zugfahrzeugs eine Überprüfung des angekoppelten Anhängers ermöglicht, wird vorgeschlagen, Messdaten von mindestens einem zum Anhänger gerichteten optischen Sensor zu empfangen, basierend auf den empfangenen Messdaten eine Position und/oder Abmessungen von mindestens einer anhängerseitigen Komponente zu ermitteln, die ermittelte Position und/oder Abmessungen der mindestens einen anhängerseitigen Komponente mit einer Position und/oder mit Abmessungen einer anhängerseitigen Komponente bei einem ordnungsgemäß angekoppelten Anhänger zu vergleichen und Abweichungen zu ermitteln, wobei ein Betrieb des Zugfahrzeugs mit dem angeschlossenen Anhänger freigegeben wird, wenn die Abweichungen innerhalb eines Toleranzbereichs liegen. Erfindungsgemäß ist vorgesehen, dass die Position und/oder Abmessungen der anhängerseitigen Komponente bei einem ordnungsgemäß angekoppelten Anhänger aus einem fahrzeugseitigen Speicher empfangen, aus einem fahrzeugexternen Speicher empfangen oder durch eine manuelle Kalibrierung ermittelt werden, wobei der fahrzeugexterne Speicher ein Cloudserver ist

## Beschreibung

Die Erfindung betrifft ein Verfahren zum Detektieren eines an ein Zugfahrzeug ordnungsgemäß angeschlossenen Anhängers, ein Verfahren zum Kalibrieren eines Steuergeräts eines Zugfahrzeugs zum Erkennen eines ordnungsgemäß angeschlossenen Anhängers sowie ein Kraftfahrzeug, welches insbesondere als ein Zugfahrzeug ausgestaltet ist.

In unterschiedlichen Situationen ist der Einsatz eines Anhängers unerlässlich, um die Ladekapazitäten des Zugfahrzeugs zu erweitern. Ist ein Fahrzeugführer eines Zugfahrzeugs beispielsweise durch hinter ihm wartende Verkehrsteilnehmer unter Druck bei einem Ankoppeln des Anhängers, können Flüchtigkeitsfehler auftreten, die in einem potentiellen Unfallrisiko resultieren. Eine noch angezogene Feststellbremse des Anhängers, ein nicht vollständig angehobenes Stützrad des Anhängers, eine vergessene elektrische Steckverbindung oder eine nicht korrekt verrastete Kugelkupplung können den sicheren Betrieb des Fahrzeuggespanns beeinträchtigen.

Es sind bereits Verfahren bekannt, bei welchen ein Zugfahrzeug über eine Eigendiagnose erkennen kann, ob die Beleuchtungseinrichtung eines gekoppelten Anhängers einen Fehler aufweist, und dies durch eine Warnung an den Fahrer des Zugfahrzeugs signalisieren kann. Eine weitere bekannte Möglichkeit besteht in der Verwendung einer fahrzeugseitigen Anhängerkupplung, welche Sensoren aufweist und somit die ordnungsgemäße Verwendung des Anhängers sicherstellt. Eine derartige Anhängerkupplung ist aus der DE 10 2014 008 077 A1 bekannt. Derartige Möglichkeiten sind jedoch auf die Überprüfung einer korrekt verrasteten Kugelkupplung beschränkt. Des Weiteren ist eine zusätzliche Sensorik an der Anhängerkupplung notwendig, um eine derartige Überprüfung vorzunehmen.

Die DE 10 2020 107 142 A1 zeigt ein Anhängerunterstützungssystem für Anhänger mit einziehbarem Absenkbein. Ein Kraftfahrzeug beinhaltet eine Vorrichtung zum Ziehen eines Anhängers mit einem einziehbaren Absenkbein. Eine Rückfahrkamera nimmt ein Erfassungsbild mit einem Sichtfeld, das den Anhänger beinhaltet, auf. Eine Fahrzeugsteuerung erfasst eine Einleitung des Fahrens mit dem angeschlossenen Anhänger. Ein Musterspeicher speichert mindestens ein Bildmuster vor, das eine ausgefahrene Position oder eine eingefahrene Position des Absenkbeins angibt. Ein Bildscanner empfangt das Erfassungsbild, wenn die Einleitung des Fahrens erkannt wird, wobei der Bildscanner das Erfassungsbild und das mindestens eine Bildmuster vergleicht, um zu erfassen, ob sich das Absenkbein in der ausgefahrenen Position befindet. Ein Benachrichtigungsgerät, das auf den Bildscanner reagiert, warnt einen Fahrer, wenn die ausgefahrene Position erkannt wird.

Die DE 10 2017 003 079 A1 zeigt eine Technik zur Einbeziehung einer Bedienungsanleitung in die Bedienung eines Fahrzeugs. Ein Vorrichtungsaspekt der Technik umfasst eine Anzeigeeinheit, die im Fahrzeug angeordnet oder anordenbar ist; eine Eingabeeinheit, die im Fahrzeug angeordnet oder anordenbar ist; und eine mit der Anzeigeeinheit und der Eingabeeinheit in Signalverbindung stehende oder bring bare Steuerungseinheit. Steuerungseinheit speichert eine Bedienungsanleitung mit einer Vielzahl von Abschnitten, wobei jedem Abschnitt mindestens ein Fahrzeugbezug zugeordnet ist, erfasst Signale mit einem Fahrzeugbezug, zeigt an der Anzeigeeinheit eine Fahrzeugmeldung an, die den erfassten Fahrzeugbezug angibt und einen Verweis auf die Bedienungsanleitung umfasst, der durch eine erste Betätigung der Eingabeeinheit abwählbar ist, und stellt in Reaktion auf die erste Betätigung der Eingabeeinheit die Bedienungsanleitung mittels der Anzeigeeinheit und der Eingabeeinheit bereit, wobei die Anzeigeeinheit einen Ausschnitt der Bedienungsanleitung mittels der Anzeigeeinheit anzeigt, welcher mindestens einen Teil des dem erfassten Fahrzeugbezug zugeordneten Abschnitts umfasst.

Die DE 10 2017 008 559 A1 zeigt ein Verfahren zum Betrieb einer Anhängekupplung für ein Fahrzeug, wobei ein Kupplungselement zum Ankuppeln eines Anhängers und eine Stromversorgungseinheit zur elektrischen Stromversorgung des Anhängers vorgesehen sind. Es ist vorgesehen, dass anhand erfasster Bilddaten einer Rückfahrkamera des Fahrzeuges ermittelt wird, ob eine Stromversorgung zwischen dem Fahrzeug und dem Anhänger hergestellt ist, wobei bei nicht hergestellter Stromversorgung ein Hinweis im Fahrzeug ausgegeben wird. Die DE 10 2018 204 977 A1 zeigt ein Verfahren zum Erkennen einer Abstandsänderung zwischen einer Zugmaschine und einem Anhänger oder zwischen zwei Anhängern, wobei ein erster Abstand zwischen mindestens einem an der Zugmaschine angebrachten Sensor und einem Bauteil des Anhängers nach einem Ankoppelvorgang erkannt wird, der ermittelte erste Abstand als Referenzwert festgelegt wird, eine maximale Abweichung vom Referenzwert als ein Grenzwert festgelegt wird , ein zweiter Abstand während einer Betriebszeit des Zugfahrzeugs und des Anhängers mit dem mindestens einen Sensor kontinuierlich ermittelt wird, der Referenzwert mit dem kontinuierlich ermittelten zweiten Abstand verglichen wird und eine Abstandsvergrößerung bei einem Ansteigen des zweiten Abstandes über den Grenzwert erkannt wird. Des Weiteren ist eine Vorrichtung zum Erkennen einer Abstandsänderung zwischen einem Zugfahrzeug und einem Anhänger zum Verhindern eines Verlustes des Anhängers während der Fahrt offenbart.

Problematisch an den bekannten Vorrichtungen und Verfahren ist darüber hinaus die fehlende Überprüfung, ob das Stützrad des Anhängers für die Fahrt angehoben und die Feststellbremse des Anhängers gelöst wurde.

Der Erfindung liegt die Aufgabe zugrunde, ein Verfahren bereitzustellen, welches anhand der fahrzeugseitigen Mittel des Zugfahrzeugs eine Überprüfung des angekoppelten Anhängers, insbesondere im Hinblick auf die Fahrbereitschaft des Anhängers, ermöglicht. Diese Aufgabe wird durch die im Anspruch 1 angegebenen Merkmale gelöst. Weitere vorteilhafte Ausgestaltungen der Erfindung sind in den Unteransprüchen beschrieben.

Gemäß einem Aspekt der Erfindung wird ein Verfahren zum Detektieren eines an ein Zugfahrzeug ordnungsgemäß angeschlossenen Anhängers bereitgestellt. In einem Schritt werden Messdaten von mindestens einem zum Anhänger gerichteten optischen Sensor empfangen. Der optische Sensor kann beispielsweise als eine Rückfahrkamera, ein heckseitiger LIDAR-Sensor, Spiegelersatzkameras und dergleichen ausgestaltet sein.

Basierend auf den empfangenen Messdaten wird eine Position und/oder Abmessungen von mindestens einer anhängerseitigen Komponente ermittelt. Die mindestens eine anhängerseitige Komponente kann eine sicherheitsrelevante Komponente des Anhängers sein. Dabei kann eine derartige anhängerseitige Komponente ein Stützrad, eine Deichsel, eine anhängerseitige Kupplungsvorrichtung, eine Feststellbremse, eine Plane, eine Tür und dergleichen sein, welche für den sicheren Betrieb eines Fahrzeuggespanns aus einem Zugfahrzeug und dem Anhänger relevant ist.

Die ermittelte Position und/oder Abmessungen der mindestens einen anhängerseitigen Komponente werden mit einer Position und/oder mit Abmessungen einer anhängerseitigen Komponente bei einem ordnungsgemäß angekoppelten Anhänger verglichen und Abweichungen ermittelt bzw. geprüft. Hierbei kann beispielsweise geprüft werden, ob ein Stützrad einen Untergrund berührt oder angehoben ist. Des Weiteren kann das seitliche oder vertikale Hinausragen einer angezogenen Feststellbremse des Anhängers ebenfalls optisch detektiert werden. Eine geöffnete Tür oder Plane des Anhängers kann durch einen entsprechenden in Höhenrichtung oder seitlich hinausragenden bzw. abstehenden Abschnitt der Tür oder der Plane registriert werden.

Die Position und/oder Abmessungen einer anhängerseitigen Komponente bei einem ordnungsgemäß angekoppelten Anhänger entsprechen somit Soll-Daten der mindestens einen anhängerseitigen Komponente. Die anhand der Messdaten ermittelte Position und/oder Abmessungen einer anhängerseitigen Komponente entsprechen Ist-Daten der mindestens einen anhängerseitigen Komponente. Ein Vergleich zwischen den Soll-Daten und den Ist-Daten liefert somit ein Ergebnis innerhalb eines vordefinierten Toleranzbereichs oder außerhalb des Toleranzbereichs.

Durch das Verfahren kann somit basierend auf den fahrzeugseitigen Mitteln des Zugfahrzeugs erkannt und ausgewertet werden, ob der Anhänger korrekt angekoppelt wurde und/oder ob der Anhänger fahrbereit ist. Ein Betrieb des Zugfahrzeugs wird mit dem angeschlossenen Anhänger freigegeben, wenn die Abweichungen zwischen den Soll-Daten und den Ist-Daten innerhalb eines Toleranzbereichs liegen.

Wird hingegen der Toleranzbereich bei einem Abgleich der Soll-Daten und der Ist-Daten überschritten, ist der Anhänger und damit auch das Fahrzeuggespann nicht fahrbereit, da zumindest eine sicherheitsrelevante Komponente des Anhängers von einer vorgesehenen Position abweicht.

Die Messdaten des mindestens einen optischen Sensors können von einem fahrzeugseitigen Steuergerät empfangen und ausgewertet werden, um den Abgleich zwischen den Soll-Daten und den Ist-Daten durchzuführen. Somit können Fahrzeuge bzw. Zugfahrzeuge, die mit einem Anhängerrangierassistent oder einer Rückfahrkamera ausgerüstet sind, zum Durchführen des Verfahrens geeignet sein. Eine zusätzliche Sensorik ist somit nicht notwendig, wodurch die Kosten für die Umsetzung des Verfahrens bzw. einer derartigen Funktion gering sind. Beispielsweise können die Messdaten einer Rückfahrkamera mit Hilfe eines maschinellen Lernverfahrens oder einer künstlichen Intelligenz verwertet werden und somit für weitere anhängerspezifische Funktionen genutzt werden. Insbesondere können die Messdaten für die Detektion von unsicheren Betriebszuständen des Anhängers oder des Fahrzeuggespanns verwendet werden. Durch eine Bildverarbeitung ist es möglich, zu prüfen, ob die zur sicheren Fahrt notwendigen Voraussetzungen vom Fahrer durch korrekte Bedienhandlungen geschaffen wurden.

Bei der Auswertung der Messdaten können vorzugsweise typische bzw. übliche Formen und Anordnungen von anhängerseitigen Komponenten berücksichtigt werden. Beispielsweise hat ein Stützrad eines Anhängers stets eine Kurbel an einem oberen Ende, die das Hochdrehen des Stützrades ermöglicht. Darüber hinaus kann eine typische Position des Kurbelgehäuses als ein Kriterium für den Zustand oder eine Position des Stützrades sein, wenn dieses nicht direkt von der Kamera erfasst werden kann bzw. verdeckt ist. Des Weiteren ist die Form einer Feststellbremse des Anhängers üblicherweise in Form eines Hebels ausgestaltet.

Gemäß einem Ausführungsbeispiel wird die mindestens eine anhängerseitige Komponente und ein Zustand der mindestens einen anhängerseitigen Komponente durch einen Erkennungsalgorithmus oder durch ein maschinelles Lernverfahren basierend auf den empfangenen Messdaten des mindestens einen optischen Sensors ermittelt. Der Zustand der mindestens einen anhängerseitigen Komponente kann von der Position und/oder einer Abmessung abhängen und bestimmen, ob der Anhänger fahrbereit ist. Der Erkennungsalgorithmus oder das maschinelle Lernverfahren kann hierfür bestimmte Muster in den empfangenen Messdaten des optischen Sensors erkennen und auswerten. Ein anschließender Vergleich mit Soll-Daten ermöglicht die Überprüfung der sicheren Fahrbereitschaft des Anhängers.

Ein entsprechendes Muster kann beispielsweise durch ein direktes Detektieren einer Distanz zwischen dem Stützrad gegenüber dem Untergrund durch eine Rückfahrkamera oder einen heckseitig angeordneten LIDAR-Sensor ermittelt und zur Bewertung der Fahrbereitschaft des Anhängers herangezogen werden.

Das maschinelle Lernverfahren kann vorzugsweise selbstlernend ausgestaltet sein. Dieses wäre durch ein Anlernen mit neuen Anhängermodellen mit der Zeit zunehmend intelligenter. Die für die Überprüfung erforderlichen Soll-Daten der anhängerseitigen Komponente können besonders flexibel berücksichtigt werden, wenn die Position und/oder Abmessungen der anhängerseitigen Komponente bei einem ordnungsgemäß angekoppelten Anhänger aus einem fahrzeugseitigen Speicher empfangen, erfindungsgemäß aus einem fahrzeugexternen Speicher empfangen oder durch eine manuelle Kalibrierung ermittelt werden.

Erfindungsgemäß kann das Steuergerät über eine Kommunikationsverbindung datenleitend mit einem externen Speicher bzw. einer Cloud verbunden sein. Hierdurch können Fahrzeughersteller und Anhängerhersteller im Vorfeld Soll-Daten verschiedener Anhängermodelle in dem Speicher hinterlegen und den Fahrern von Zugfahrzeugen bereitstellen. Des Weiteren kann der Speicher zum Bereitstellen von Soll-Daten verwendet werden, welche durch kundenseitige Kalibrierungen ermittelt wurden. Durch diese Maßnahme könnten Soll-Daten zusammen mit weiteren charakteristischen Merkmalen, wie beispielsweise einer Form der Deichsel, einer Position von Bedieneinrichtungen, insbesondere der Feststellbremse und des Stützrads, einer Position von Reflektoren und dergleichen für die Überprüfung der korrekten Anbindung des entsprechenden Anhängers an einem Zugfahrzeug herangezogen werden.

Bei einer erstmaligen Nutzung eines Anhängers kann beispielsweise ein Abgleich zwischen dem fahrzeugseitigen Steuergerät und dem Speicher erfolgen. Dieser Abgleich kann vollautomatisch oder mit Hilfe von Fahrereingaben umgesetzt werden. Beispielsweise können dem Fahrer über ein Infotainmentsystem des Zugfahrzeugs Anhängermodelle vorschlagen werden, um die typischen Kalibrierwerte bzw. Soll-Daten zu übernehmen. Durch diese Maßnahme ist keine manuelle Kalibrierung zur Ermittlung von Soll-Daten notwendig. Alternativ kann der Fahrer mit Hilfe einer Suchmaske im Infotainmentsystem ein bestimmtes Anhängermodell oder einen bestimmten Anhängertyp direkt suchen und auswählen.

Bei einer ausreichend großen Datenbank im Speicher können Serienanhänger vollständig automatisch erfasst werden. Eine manuelle Eingabe oder Kalibrierung zur Ermittlung von Soll-Daten des Anhängers ist somit nur bei Eigenbauten, Umrüstungen oder Spezialanfertigungen notwendig.

Die Betriebssicherheit des Fahrzeuggespanns kann gesteigert werden, wenn eine Warnmeldung ausgegeben und/oder der Betrieb des Zugfahrzeugs durch Arretieren einer fahrzeugseitigen Feststellbremse verhindert wird, wenn die Abweichungen außerhalb des Toleranzbereichs liegen. Neben der reinen optischen und akustischen Warnung des Fahrers bei einem Fehler kann somit eine Anfahrverhinderung realisiert werden. Je nach Ausgestaltung kann diese Anfahrtsverhinderung mit Hilfe einer arretierten Feststellbremse durch den Fahrer überbrückbar oder deaktivierbar ausgestaltet sein.

Nach einer weiteren Ausführungsform wird das Verfahren im Stillstand des Zugfahrzeugs, bei Fahrtantritt des Zugfahrzeugs und/oder bei Fahrt des Zugfahrzeugs durchgeführt. Neben einer Prüfung des sicheren Zustands des Anhängers vor Fahrtantritt kann hierdurch auch eine regelmäßige Überprüfung der Verkehrssicherheit des Anhängers während der Fahrt erfolgen. Durch diese Maßnahme kann der Betrieb des Fahrzeuggespanns noch sicherer ausgestaltet sein. Beispielsweise kann ein unbeabsichtigtes Lösen des Stützrads oder einer Plane bzw. einer Tür des Anhängers während der Fahrt rechtzeitig erkannt werden.

Gemäß einem weiteren Aspekt der Erfindung wird ein Verfahren zum Kalibrieren eines Steuergeräts eines Zugfahrzeugs zum Erkennen eines ordnungsgemäß angeschlossenen Anhängers bereitgestellt. Beispielsweise kann ein derartiges Kalibrieren manuell durch einen Fahrer eines Zugfahrzeugs umgesetzt werden.

Bei einem Schritt wird ein Anhänger ordnungsgemäß an das Zugfahrzeug angeschlossen. Anschließend werden Messdaten des ordnungsgemäß angeschlossenen Anhängers von mindestens einem optischen Sensor ermittelt. Die Messdaten können beispielsweise in Form von Bildern oder in Form von einer Messdatenwolke ermittelt werden.

Mit Hilfe der ermittelten Messdaten werden anhängerseitige Komponenten, insbesondere eine Kupplung, ein Stützrad und eine Feststellbremse des Anhängers, detektiert oder manuell festgelegt. Dies kann automatisiert durch einen Algorithmus oder manuell durch eine Eingabe des Fahrers realisiert werden. Dabei kann ein Infotainmentsystem des Zugfahrzeugs für eine Eingabe genutzt werden.

In einem weiteren Schritt des Verfahrens werden eine Position und/oder Abmessungen der anhängerseitigen Komponenten bei einem ordnungsgemäß an das Zugfahrzeug angeschlossen Anhänger ermittelt.

Die Position und/oder Abmessungen der anhängerseitigen Komponenten bei einem ordnungsgemäß an das Zugfahrzeug angeschlossen Anhänger werden beispielsweise als Soll-Daten der mindestens einen anhängerseitigen Komponente definiert. Diese Soll-Daten dienen als Vergleichskriterium für die Überprüfung der ordnungsgemäß angeordneten und eingestellten anhängerseitigen Komponenten. Ist beispielsweise ein Stützrad nicht angezogen bzw. vom Untergrund beabstandet, wird ein Vergleich der Ist-Daten mit den Soll-Daten in einer Abweichung resultieren.

Nach einer Ausführungsform werden die anhängerseitigen Komponenten nacheinander derart manuell in Ihrem Zustand verändert, dass der Anhänger nicht ordnungsgemäß an dem Zugfahrzeug angeschlossen ist. Das Verfahren kann als eine im Infotainmentsystem geführte Anlernprozedur für neue oder unbekannte Anhängermodelle realisiert sein. Beispielsweise muss der Fahrer hierfür einen Kalibrierprozess starten. Neben der Ermittlung des Soll-Zustands können im Rahmen der Kalibrierung auch fehlerhafte Einstellungen oder unsichere Zustände der anhängerseitigen Komponenten angelernt werden. Hierfür stellt der Fahrer die entsprechenden ordnungsgemäßen und nicht ordnungsgemäßen Zustände manuell am Anhänger ein. Die jeweiligen Zwischenschritte können jeweils im Infotainmentsystem durch manuelle Eingaben quittiert werden. Entsprechend können die jeweiligen Messdaten ordnungsgemäßen und nicht ordnungsgemäßen Zuständen zugeordnet werden. Die Eingabe kann haptisch oder akustisch durch den Fahrer erfolgen.

Zum Beispiel koppelt der Fahrer seinen Anhänger zunächst korrekt an und wird dann per Menüführung des Infotainmentsystems dazu aufgefordert, die Handbremse bzw. Feststellbremse des Anhängers anzuziehen. Diesen Zustand stellt er ein und bestätigt die angezogene Handbremse im Infotainmentsystem per Tastendruck. Die nächste Abfrage betrifft beispielsweise das Stützrad, welches zunächst einmal im korrekt gekoppelten Zustand in oberer Position erfasst wird. Danach lässt der Fahrer das Stützrad zum Untergrund ab und muss darauffolgend diesen Zustand im Infotainmentsystem quittieren.

Je nach Ausgestaltung können verschiedene Anhänger als Profile im Speicher hinterlegt werden, sodass die Positionen der anhängerseitigen Komponenten bzw. Betriebseinrichtungen, wie Stützrad oder Hebel der Feststellbremse, optisch über das Infotainmentsystem dargestellt und für die Signalisierung eines fahrbereiten Zustands des Anhängers nutzbar sind.

Mit Hilfe dieses Kalibrierprozesses kann die optische Erkennung basierend auf den empfangenen Messdaten permanent den Istzustand bzw. Ist-Daten mit dem Sollzustand bzw. Soll-Daten abgleichen und kann unverzüglich auf Abweichungen der Betriebsmittel des Anhanges reagieren.

Die Kalibrierung bzw. das Anlernen neuer Anhänger kann besonders komfortabel durchgeführt werden, wenn das Verändern des Zustands der anhängerseitigen Komponenten durch ein Infotainmentsystem des Zugfahrzeugs geführt und/oder in dem Infotainmentsystem des Zugfahrzeugs bestätigt wird.

Nach einem weiteren Aspekt der Erfindung wird ein Kraftfahrzeug, insbesondere ein Zugfahrzeug, bereitgestellt. Das Kraftfahrzeug weist mindestens einen entgegen einer Fahrtrichtung des Kraftfahrzeugs gerichteten optischen Sensor auf, welcher datenleitend mit einem Steuergerät verbunden ist. Das Kraftfahrzeug ist dazu eingerichtet, mindestens eines der erfindungsgemäßen Verfahren auszuführen.

Ein derartiges Kraftfahrzeug kann ausschließlich mit bordeigenen Mitteln einen angeschlossenen Anhänger hinsichtlich der Betriebssicherheit überprüfen. Insbesondere kann mit Hilfe des mindestens einen optischen Sensors der Anhänger überwacht werden. Dabei können die anhängerseitigen Betriebsmittel bzw. Komponenten, wie Stützrad, Hebel der Feststellbremse, Plane, Tür und dergleichen, bezüglich eines für die Fahrt geeigneten Zustands überwacht werden.

Ein fahrzeugseitiges Steuergerät kann vorzugsweise die Messdaten des mindestens einen optischen Sensors empfangen und auswerten. Dabei kann das Steuergerät ein maschinelles Lernverfahren anwenden, um eine optische Analyse der Messdaten auszuführen.

Nachfolgend werden Ausführungsbeispiele der Erfindung anhand der Zeichnungen näher erläutert. Es zeigen:
- Fig. 1: eine Seitenansicht eines Kraftfahrzeugs gemäß einer Ausführungsform der Erfindung mit einem Anhänger,
- Fig. 2: eine schematische Darstellung von empfangenen und ausgewerteten Messdaten durch ein Infotainmentsystem mit einer optischen Warnmeldung aufgrund einer fehlerhaft angeschlossenen Kugelkupplung,
- Fig. 3: eine schematische Darstellung von empfangenen und ausgewerteten Messdaten durch ein Infotainmentsystem mit einer optischen Warnmeldung aufgrund einer arretierten Feststellbremse des Anhängers,
- Fig. 4: eine schematische Darstellung von empfangenen und ausgewerteten Messdaten durch ein Infotainmentsystem mit einer optischen Warnmeldung aufgrund einer entkoppelten Steckverbindung,
- Fig. 5: eine schematische Darstellung von empfangenen und ausgewerteten Messdaten durch ein Infotainmentsystem mit einer optischen Warnmeldung aufgrund eines ausgefahrenen Stützrads, und
- Fig. 6: eine schematische Darstellung von empfangenen und ausgewerteten Messdaten durch ein Infotainmentsystem mit einer optischen Warnmeldung aufgrund eines entkoppelten Anhängers.

In den Figuren weisen dieselben konstruktiven Elemente jeweils dieselben Bezugsziffern auf.

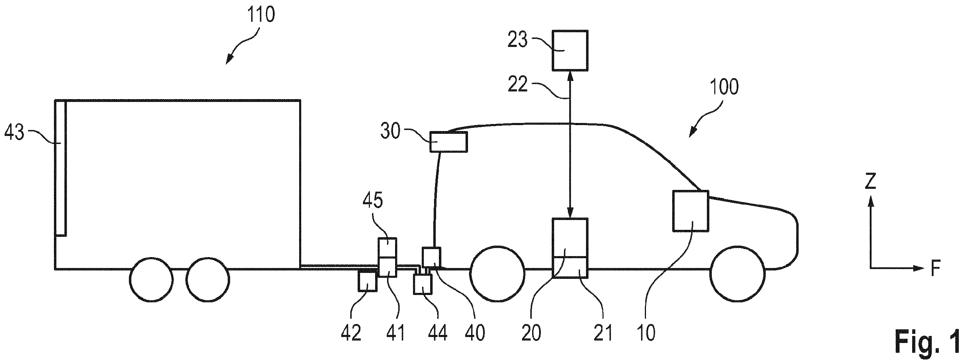

Die Fig. 1 zeigt eine Seitenansicht eines Kraftfahrzeugs 100 gemäß einer Ausführungsform der Erfindung mit einem Anhänger 110. Das Kraftfahrzeug 100 und der Anhänger 110 bilden gemeinsam ein Fahrzeuggespann.

Das Kraftfahrzeug 100 weist ein Infotainmentsystem 10 auf, welches datenleitend mit einem Steuergerät 20 verbunden ist. Das Infotainmentsystem 10 kann beispielsweise ein Display für eine optische Darstellung von Informationen und für eine Eingabe von Steuerbefehlen durch einen Fahrer des Kraftfahrzeugs 100 aufweisen.

Des Weiteren weist das Kraftfahrzeug 100 einen optischen Sensor 30 auf, welcher als eine Rückfahrkamera ausgestaltet ist. Der optische Sensor 30 ist ebenfalls datenleitend mit dem Steuergerät 20 verbunden.

Das Steuergerät 20 weist einen internen Speicher 21 auf. Des Weiteren kann das Steuergerät 20 über eine drahtlose Kommunikationsverbindung 22 Daten von einem fahrzeugexternen Speicher 23 empfangen. Der fahrzeugexterne Speicher 23 ist erfindungsgemäß als ein Cloudserver ausgestaltet.

Es können verschiedene Anhängermodelle als Profile im internen Speicher 21 oder im fahrzeugexternen Speicher 23 hinterlegt werden, sodass Positionen von anhängerseitigen Komponenten bzw. Betriebseinrichtungen 40, 41, 42, 43, wie eine Kugelkupplung 40, ein Stützrad 41, ein Hebel der Feststellbremse 42 oder eine Plane 43 des Anhängers 110, optisch über das Infotainmentsystem 10 dargestellt und für die Signalisierung eines fahrbereiten Zustands des Anhängers 110 nutzbar sind.

Der Anhänger 110 ist über die Kugelkupplung 40 mit dem Kraftfahrzeug 100 verbindbar. Vor der Fahrt des Fahrzeuggespanns sollte die Plane 43 verschlossen, das Stützrad 41 vom Untergrund beabstandet und die Feststellbremse 42 gelöst werden. Durch diese Zustände der anhängerseitigen Komponenten bzw. Betriebseinrichtungen 40, 41, 42, 43 ist der Anhänger 110 fahrbereit.

Weichen einige der Zustände der anhängerseitigen Komponenten 40, 41, 42, 43 von Sollzuständen ab, so kann eine sichere Fahrt des Fahrzeuggespanns nicht gewährleistet werden. Dies kann mit Hilfe von Messdaten des optischen Sensors 30 geprüft werden. Eine entsprechende Auswertung kann das Steuergerät 20 übernehmen.

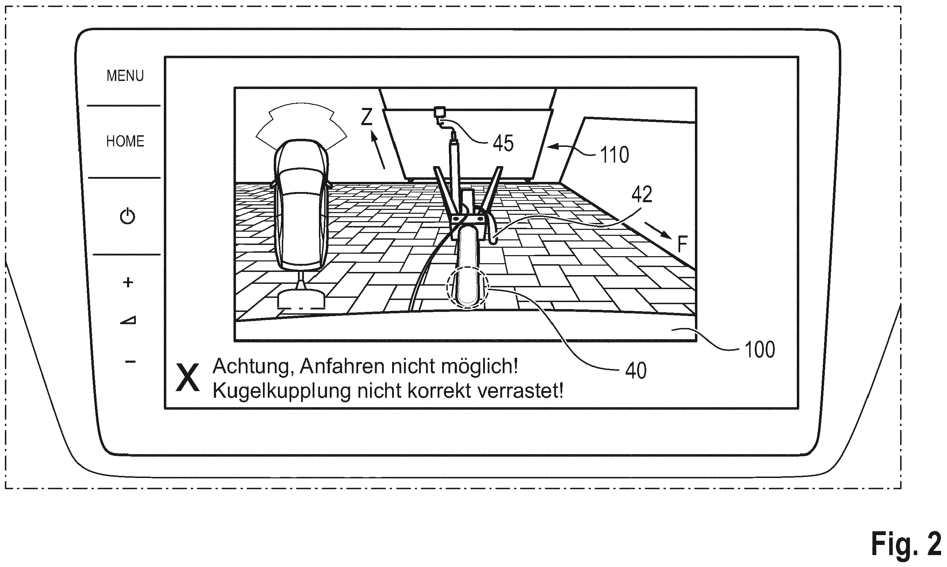

Die Fig. 2-6 zeigen schematische Darstellungen von empfangenen und ausgewerteten Messdaten durch das Infotainmentsystem 10 mit einer optischen Warnmeldung. Die Fig. 2-6 dienen der Veranschaulichung eines Verfahrens zum Detektieren eines an ein Zugfahrzeug 100 ordnungsgemäß angeschlossenen Anhängers 110.

Es werden Messdaten des zum Anhänger 110 gerichteten optischen Sensors 30 vom Steuergerät 20 empfangen. Das Steuergerät 20 kann mit Hilfe eines Erkennungsalgorithmus oder eines maschinellen Lernverfahrens die Messdaten auswerten und durch das Infotainmentsystem 10 visualisieren. In den Fig. 2-6 ist ein Bildschirm 11 des Infotainmentsystems 10 mit einer Darstellung des Anhängers 110 durch die empfangenen Messdaten des optischen Sensors 30 gezeigt.

Basierend auf den empfangenen Messdaten wird eine Position und/oder Abmessungen von mindestens einer anhängerseitigen Komponente 40, 41, 42, 43 ermittelt. Die mindestens eine anhängerseitige Komponente 40, 41, 42, 43 kann eine sicherheitsrelevante Komponente des Anhängers 110 sein. Dabei kann eine derartige anhängerseitige Komponente 40, 41, 42, 43 beispielsweise ein Stützrad 41, eine anhängerseitige Kupplungsvorrichtung bzw. Kugelkupplung 40, eine Feststellbremse 42, eine Plane 43 und dergleichen sein, welche für den sicheren Betrieb eines Fahrzeuggespanns relevant ist.

Die ermittelte Position und/oder Abmessungen der mindestens einen anhängerseitigen Komponente 40, 41, 42, 43 werden mit einer Position und/oder mit Abmessungen einer anhängerseitigen Komponente 40, 41, 42, 43 bei einem ordnungsgemäß angekoppelten Anhänger 110 verglichen und Abweichungen ermittelt bzw. geprüft.

Die Position und/oder Abmessungen einer anhängerseitigen Komponente 40, 41, 42, 43 bei einem ordnungsgemäß angekoppelten Anhänger 110 entsprechen somit Soll-Daten der mindestens einen anhängerseitigen Komponente 40, 41, 42, 43. Die anhand der Messdaten ermittelte Position und/oder Abmessungen einer anhängerseitigen Komponente 40, 41, 42, 43 entsprechen Ist-Daten der mindestens einen anhängerseitigen Komponente 40, 41, 42, 43. Ein Vergleich zwischen den Soll-Daten und den Ist-Daten durch das Steuergerät 20 liefert somit ein Ergebnis innerhalb eines vordefinierten Toleranzbereichs oder außerhalb des Toleranzbereichs.

Durch das Verfahren kann ausschließlich basierend auf den fahrzeugseitigen Mitteln des Kraftfahrzeugs 100 erkannt und ausgewertet werden, ob der Anhänger 110 korrekt angekoppelt wurde und/oder ob der Anhänger 110 fahrbereit ist. Ein Betrieb des Kraftfahrzeugs 100 wird mit dem angeschlossenen Anhänger 110 freigegeben, wenn die Abweichungen zwischen den Soll-Daten und den Ist-Daten innerhalb eines Toleranzbereichs liegen.

Wird hingegen der Toleranzbereich bei einem Abgleich der Soll-Daten und der Ist-Daten überschritten, ist der Anhänger 110 und damit auch das Fahrzeuggespann nicht fahrbereit, da zumindest eine sicherheitsrelevante Komponente 40, 41, 42, 43 des Anhängers 110 von einer vorgesehenen Position abweicht.

In der Fig. 2 ist eine schematische Darstellung von empfangenen und ausgewerteten Messdaten durch einen Bildschirm 11 des Infotainmentsystems 10 mit einer optischen Warnmeldung aufgrund einer fehlerhaft angeschlossen Kugelkupplung 40 gezeigt. Der Bildschirm 11 zeigt eine Sicht auf den Anhänger 110 aus der Perspektive des optischen Sensors 30. Die Kugelkupplung 40 weicht in Höhenrichtung z von den Soll-Daten ab und liegt außerhalb eines vordefinierten Toleranzbereichs.

Die Abweichung der Kugelkupplung 40 von den Soll-Daten ist vorzugsweise im Bildschirm 11 markiert, um dem Fahrer den fehlerhaften Zustand zu signalisieren.

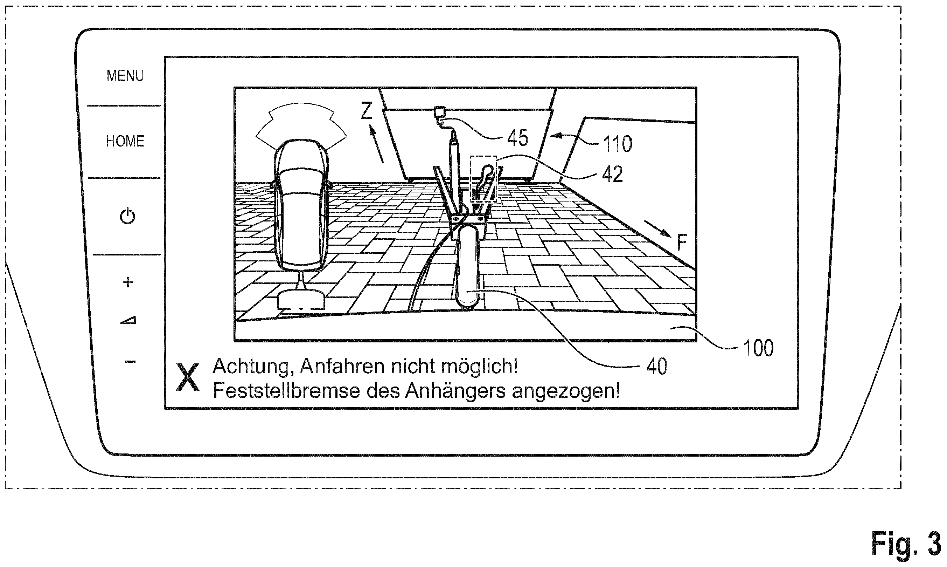

Die Fig. 3 zeigt eine schematische Darstellung von empfangenen und ausgewerteten Messdaten durch einen Bildschirm 11 des Infotainmentsystems 10 mit einer optischen Warnmeldung aufgrund einer arretierten Feststellbremse 42 des Anhängers 110.

Das Steuergerät 20 kann durch eine Auswertung der Messdaten des optischen Sensors 30 einen angezogenen Hebel der Feststellbremse 42 optisch erfassen. Dabei kann das Steuergerät 20 neben optischen und/oder akustischen Warnungen auch Steuerbefehle erzeugen, durch welche ein Betrieb des Kraftfahrzeugs 100 als Zugfahrzeug des Fahrzeuggespanns verhindert oder zumindest verzögert wird.

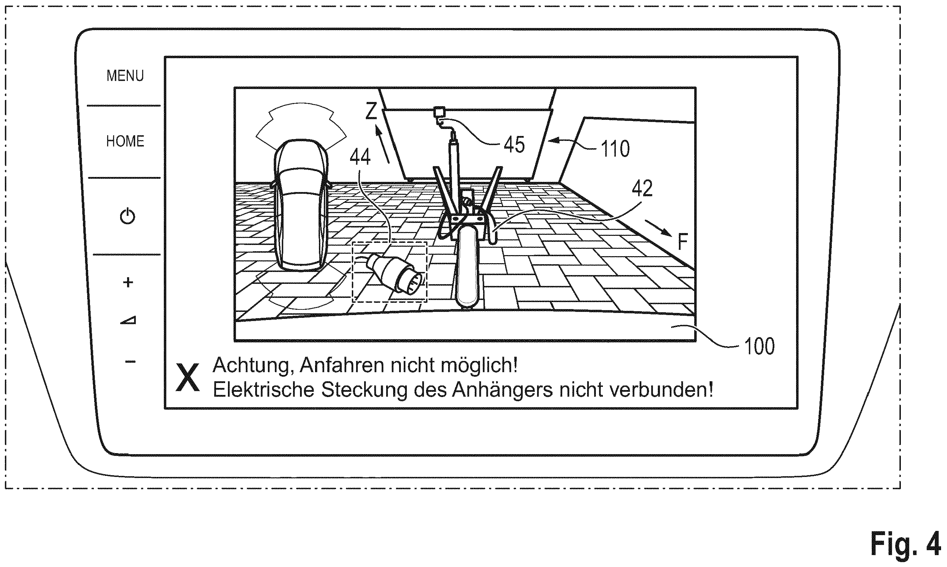

Die Fig. 4 zeigt eine schematische Darstellung von empfangenen und ausgewerteten Messdaten durch einen Bildschirm 11 des Infotainmentsystems 10 mit einer optischen Warnmeldung aufgrund einer entkoppelten Steckverbindung 44 des Anhängers 110. Dabei liefert der Erkennungsalgorithmus des Steuergeräts 20 als Ergebnis einen ordnungsgemäß angeschlossenen Anhänger 110. Eine zusätzliche elektrische Eigendiagnose kann den fehlerhaften Anschluss der elektrischen Steckverbindung 44 detektieren und den Fahrer entsprechend warnen.

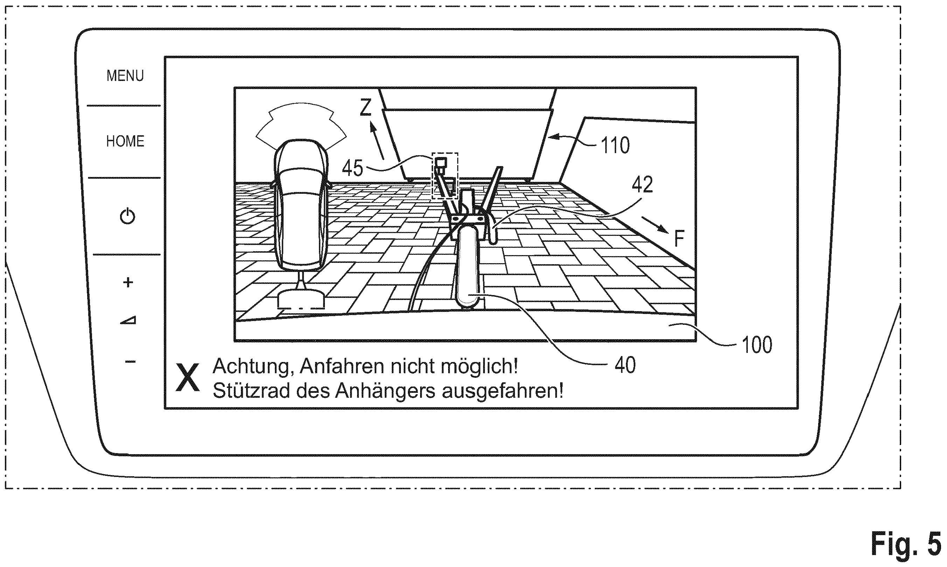

In der Fig. 5 ist eine schematische Darstellung von empfangenen und ausgewerteten Messdaten durch einen Bildschirm 11 des Infotainmentsystems 10 mit einer optischen Warnmeldung aufgrund eines ausgefahrenen Stützrads 41 gezeigt. Dabei kann das Stützrad 41 selbst oder eine Kurbel 45 des Stützrads 41 optisch detektiert und hinsichtlich der Soll-Daten geprüft werden.

Im dargestellten Ausführungsbeispiel weist das Stützrad 41 Bodenkontakt auf. Zum Herstellen eines fahrbereiten Zustands muss das Stützrad 41 zuerst vom Untergrund beabstandet werden.

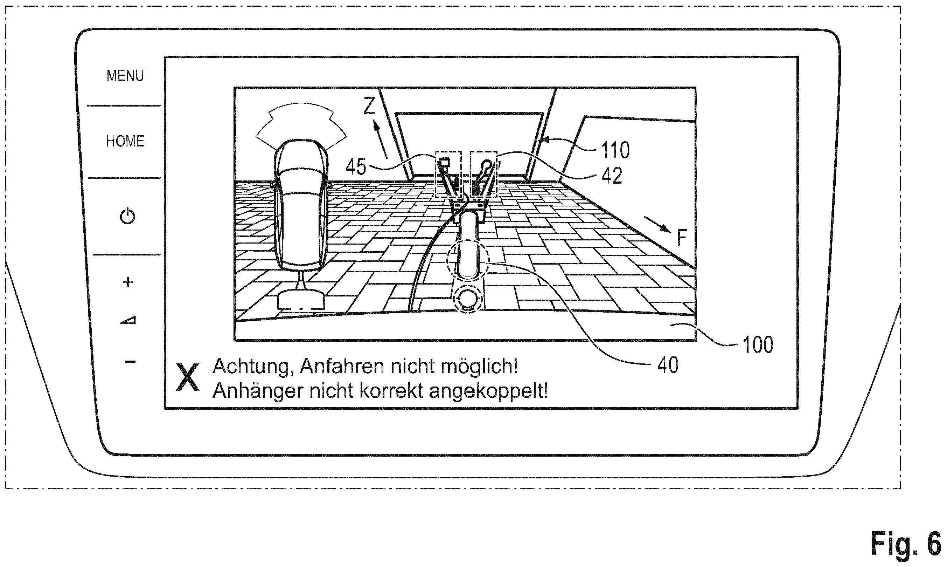

Die Fig. 6 zeigt eine schematische Darstellung von empfangenen und ausgewerteten Messdaten durch einen Bildschirm 11 des Infotainmentsystems 10 mit einer optischen Warnmeldung aufgrund eines entkoppelten Anhängers 110. Das Steuergerät 20 erkennt einen elektrisch über eine Steckverbindung 44 angeschlossenen Anhänger 110, jedoch ist der Anhänger 110 mechanisch nicht mit dem Kraftfahrzeug 100 gekoppelt. Insbesondere wird im dargestellten Ausführungsbeispiel eine Abweichung vom Toleranzbereich bei der Feststellbremse 42, dem Stützrad 41 und der Kugelkupplung 40 registriert. Die Kugelkupplung 40 weicht entgegen einer Fahrtrichtung F des Kraftfahrzeugs 100 von den Soll-Daten ab. Ein Betrieb des Kraftfahrzeugs 100 wird durch ein Arretieren einer Parkbremse des Kraftfahrzeugs 100 unterbunden.

### Bezugszeichenliste

- 100: Kraftfahrzeug / Zugfahrzeug
- 110: Anhänger

- 10: Infotainmentsystem

- 20: Steuergerät
- 21: interner Speicher des Steuergeräts
- 22: Kommunikationsverbindung
- 23: fahrzeugexterner Speicher

- 30: optischer Sensor / Rückfahrkamera

- 40: Kugelkupplung / anhängerseitige Komponente
- 41: Stützrad / anhängerseitige Komponente
- 42: Hebel der Feststellbremse / anhängerseitige Komponente
- 43: Plane / anhängerseitige Komponente
- 44: elektrische Steckverbindung
- 45: Kurbel des Stützrads

- F: Fahrtrichtung
- z: Höhenrichtung

## Patentansprüche

1. Verfahren zum Detektieren eines an ein Zugfahrzeug (100) ordnungsgemäß angeschlossenen Anhängers (110), wobei
- Messdaten von mindestens einem zum Anhänger (110) gerichteten optischen Sensor (30) empfangen werden,
- basierend auf den empfangenen Messdaten eine Position und/oder Abmessungen von mindestens einer anhängerseitigen Komponente (40, 41, 42, 43, 44) ermittelt wird,
- die ermittelte Position und/oder Abmessungen der mindestens einen anhängerseitigen Komponente (40, 41, 42, 43, 44) mit einer Position und/oder mit Abmessungen einer anhängerseitigen Komponente (40, 41, 42, 43, 44) bei einem ordnungsgemäß angekoppelten Anhänger (110) verglichen und Abweichungen ermittelt werden,
- ein Betrieb des Zugfahrzeugs (100) mit dem angeschlossenen Anhänger (110) freigegeben wird, wenn die Abweichungen innerhalb eines Toleranzbereichs liegen,
- **dadurch gekennzeichnet, dass**
- die Position und/oder Abmessungen der anhängerseitigen Komponente (40, 41, 42, 43, 44) bei einem ordnungsgemäß angekoppelten Anhänger (110) aus einem fahrzeugseitigen Speicher (21) empfangen, aus einem fahrzeugexternen Speicher (23) empfangen oder durch eine manuelle Kalibrierung ermittelt werden, wobei der fahrzeugexterne Speicher (23) ein Cloudserver ist.

2. Verfahren nach Anspruch 1, wobei die mindestens eine anhängerseitige Komponente (40, 41, 42, 43, 44) und ein Zustand der mindestens einen anhängerseitigen Komponente (40, 41, 42, 43, 44) durch einen Erkennungsalgorithmus oder durch ein maschinelles Lernverfahren basierend auf den empfangenen Messdaten des mindestens einen optischen Sensors (30) ermittelt wird.

3. Verfahren nach einem der Ansprüche 1 bis 2, wobei eine Warnmeldung ausgegeben und/oder der Betrieb des Zugfahrzeugs (100) durch Arretieren einer fahrzeugseitigen Feststellbremse verhindert wird, wenn die Abweichungen außerhalb des Toleranzbereichs liegen.

4. Verfahren nach einem der Ansprüche 1 bis 3, wobei das Verfahren im Stillstand des Zugfahrzeugs (100), bei Fahrtantritt des Zugfahrzeugs (100) und/oder während einer Fahrt des Zugfahrzeugs (100) durchgeführt wird.

5. Verfahren zum Kalibrieren eines Steuergeräts (20) eines Zugfahrzeugs (100),wobei das Steuergerät (20) über eine Kommunikationsverbindung datenleitend mit einem externen Speicher bzw. einer Cloud verbunden ist, zum Erkennen eines ordnungsgemäß angeschlossenen Anhängers (110), wobei
- ein Anhänger (110) ordnungsgemäß an das Zugfahrzeug (100) angeschlossen wird und Messdaten des ordnungsgemäß angeschlossenen Anhängers (110) von mindestens einem optischen Sensor (30) ermittelt werden,
- anhängerseitige Komponenten (40, 41, 42, 43, 44), insbesondere eine Kupplung (40), ein Stützrad (41) und eine Feststellbremse (42), anhand der ermittelten Messdaten detektiert oder manuell festgelegt werden,
- eine Position und/oder Abmessungen der anhängerseitigen Komponenten (40, 41, 42, 43, 44) bei einem ordnungsgemäß an das Zugfahrzeug (100) angeschlossen Anhänger (110) ermittelt werden.

6. Verfahren nach Anspruch 5, wobei die anhängerseitigen Komponenten (40, 41, 42, 43, 44) nacheinander derart manuell in Ihrem Zustand verändert werden, dass der Anhänger (110) nicht ordnungsgemäß an dem Zugfahrzeug angeschlossen ist.

7. Verfahren nach Anspruch 6, wobei das Verändern des Zustands der anhängerseitigen Komponenten (40, 41, 42, 43, 44) durch ein Infotainmentsystem (10) des Zugfahrzeugs (100) geführt und/oder in dem Infotainmentsystem (10) des Zugfahrzeugs (100) bestätigt wird.

8. Kraftfahrzeug (100), insbesondere ein Zugfahrzeug, aufweisend mindestens einen entgegen einer Fahrtrichtung (F) des Kraftfahrzeugs (100) gerichteten optischen Sensor (30), welcher datenleitend mit einem Steuergerät (20) verbunden ist, wobei das Kraftfahrzeug (100) dazu eingerichtet ist, mindestens eines der Verfahren gemäß einem der vorhergehenden Ansprüche auszuführen.
